# EUROPÄISCHE PATENTSCHRIFT

(11) **EP 4 305 685 B1**
(45) Veröffentlichungstag und Bekanntmachung des Hinweises auf die Patenterteilung: **09.04.2025**
(21) Anmeldenummer: 22708536.2
(22) Anmeldetag: 23.02.2022
(51) Int. Cl.: H01M 4/04, B30B 3/00, B65H 18/10, B65H 27/00, B30B 3/04, B30B 15/34, B30B 15/30, B29C 43/46, B29C 43/24, B29C 33/38, B29L 31/34

(54) **KALANDRIERVORRICHTUNG FÜR DIE HERSTELLUNG EINER ELEKTRODE**
CALENDERING APPARATUS FOR THE PRODUCTION OF AN ELECTRODE
APPAREIL DE CALANDRAGE POUR LA PRODUCTION D'UNE ÉLECTRODE

(30) Priorität: 08.03.2021 DE 102021105459
(43) Veröffentlichungstag der Anmeldung: 17.01.2024
(73) Patentinhaber: Bayerische Motoren Werke Aktiengesellschaft, 80809 München (DE)
(72) Erfinder: JEONG, Dongho, 85579 Neubiberg (DE)
(86) Internationale Anmeldenummer: PCT/EP2022/054497
(87) Internationale Veröffentlichungsnummer: WO 2022/189145

(56) Entgegenhaltungen:
- DE-A1- 102012 224 301
- DE-A1- 102016 112 868
- JP-A- 2006 175 501

## Beschreibung

Die vorliegende Erfindung betrifft eine Kalandriervorrichtung zur Herstellung einer Elektrode für eine Batteriezelle, insbesondere für eine Lithium-Ionen-Zelle. Eine ähnliche Kalandriervorrichtung wird in JP 2006 175501 A offenbart. Elektroden, insbesondere Elektroden mit mechanisch verdichtetem Aktivmaterial, werden beispielsweise in Batteriezellen für Elektrofahrzeuge eingesetzt.

Im Rahmen der Herstellung von Elektroden ist das sogenannte Kalandern bekannt. Dabei werden die Elektroden, die ein elektrisch leitendes Trägersubstrat, meist aus Metall sowie ein darauf aufgebrachtes und im Hinblick der Verwendung der Elektrode in einem galvanischen Element elektrochemisch relevantes Aktivmaterial aufweisen, während ihrer Herstellung einer hohen mechanischen Belastung ausgesetzt, um eine hohe Massendichte, insbesondere im Aktivmaterial, zu erreichen. Die Elektroden werden hierbei zwischen zwei Walzen hindurchgeführt, welche einen mechanischen Druck auf die Elektrode ausüben, so dass diese beim Durchführen eine Verdichtung erfährt und damit die Massendichte der Elektrode erhöht wird. Eine höhere Massendichte von Elektroden ermöglicht dabei regelmäßig eine höhere Energiedichte einer Batteriezelle, in welcher diese Elektroden zum Einsatz kommen. Aufgrund des hohen mechanischen Drucks auf die Elektrode beim Verdichtungsvorgang bauen sich oftmals mechanische Spannungen innerhalb der Elektrode auf, welche zu Verformungen der Elektrode führen können. Dies ist bei der weiteren Prozessierung wie beispielsweise bei einer weiteren Komprimierung oder bei einer nachfolgenden Aufwicklung der Elektrode auf einer Rolle nachteilig. Insbesondere kann ein verformter Bereich der Elektrode diesen weiteren Fertigungsprozess negativ beeinflussen oder gar unmöglich machen.

Aufgrund solcher Deformationen kann es zudem erschwert oder gar unmöglich werden, zusätzliche Sicherheitsbeschichtungen auf unbeschichteten Bereichen des Elektrodensubstrats auf zuverlässige Weise aufzubringen.

Der Erfindung liegt die Aufgabe zugrunde, eine verbesserte Kalandriervorrichtung bereitzustellen, mit der einer Verformung der herzustellenden Elektroden beim Kalandrieren entgegengewirkt werden kann.

Die Lösung dieser Aufgabe wird gemäß der Lehre des unabhängigen Anspruchs erreicht. Verschiedene Ausführungsformen und Weiterbildungen der Erfindung sind Gegenstand der Unteransprüche.

Die Erfindung betrifft eine Kalandriervorrichtung zur mechanischen Verdichtung einer, insbesondere flächigen, Elektrode, wobei die Vorrichtung aufweist,
- eine Verdichtungseinrichtung,
- eine Führungsrolle mit einer Abrollfäche, wobei die Führungsrolle konfiguriert ist, beim Betrieb der Kalandriervorrichtung die Elektrode der Verdichtungsreinrichtung zuzuführen,
- wobei die Führungsrolle an ihrer Abrollfläche abschnittsweise erste Bereiche und zweite Bereiche aufweist, wobei die ersten und die zweiten Bereiche unterschiedliche Wärmeleitfähigkeiten aufweisen.

Unter dem Begriff "Abrollfläche" im Sinne der Erfindung ist insbesondere die Mantelfläche einer Rolle, welche als Zylinder oder Drehzylinder ausgeführt sein kann, welche beim Abrollen der Rolle um die Drehachse nach einer Umdrehung aufgespannt werden kann, zu verstehen.

Durch die mechanische Verdichtung der Elektrode werden mechanische Spannungen innerhalb der Elektrode erzeugt. Diese Spannungen oder auch Stress-Rückstände in der Elektrode bauen sich hauptsächlich in deren Bindemittelstruktur auf. Ein unkontrolliertes Lösen dieser mechanischen Spannungen kann zu einem sogenannten Rückfederungseffekt führen, bei dem sich die Elektrode ausdehnt und im Ergebnis eine größere Dicke aufweist als unmittelbar nach der mechanischen Verdichtung. Daher ist es zur Vermeidung von Deformierungen hilfreich, die Spannungen kontrolliert aufzulösen oder erst gar nicht entstehen zu lassen. Die Spannungen können insbesondere bei hohen Temperaturen schneller aufgelöst werden als bei niedrigeren Temperaturen. Unter hohen Temperaturen im Sinne der Erfindung sind insbesondere Temperaturen von 100°C-160°C, bevorzugt von 120°C-150°C auf. Es ist daher von Vorteil, die Elektrode in erwärmten Zustand der Verdichtungseinrichtung zuzuführen, was insbesondere durch vorausgehendes Erhitzen erfolgen kann. Eine Zuführung von thermischer Energie vor der Komprimierung hat den Vorteil, dass sich während der mechanischen Verdichtung weniger Spannungen innerhalb der Elektrode aufbauen. Es ist daher vorteilhaft, die Elektrode unter möglichst geringen Verlusten der zugeführten thermischen Energie der Verdichtungseinrichtung zuzuführen. Dies wird erfindungsgemäß dadurch erreicht, dass eine zur Zuführung der Elektrode zur Verdichtungseinrichtung vorgesehene Führungsrolle der Vorrichtung an ihrer Abrollfläche abschnittsweise erste Bereiche und zweite Bereiche aufweist, wobei die ersten und die zweiten Bereiche unterschiedliche Wärmeleitfähigkeiten aufweisen, so dass der Verlust der thermischen Energie von der Elektrode an bzw. über die Führungsrolle während der Beförderung der Elektrode durch die Bereiche mit der geringeren Wärmeleitfähigkeit zumindest verringert wird.

Nachfolgend werden bevorzugte Ausführungsformen des Verfahrens beschrieben, die jeweils, soweit dies nicht ausdrücklich ausgeschlossen wird oder technisch unmöglich ist, beliebig miteinander sowie mit den weiteren beschriebenen anderen Aspekten der Erfindung kombiniert bzw. als entsprechende Ausführungsformen letzterer verwendet werden können.

Gemäß einiger Ausführungsformen weist die Führungsrolle am ersten Bereich wenigstens eine thermisch isolierende Vertiefung auf, welche sich in Bezug auf eine Achse von der Abrollfäche radial nach innen der Führungsrolle erstreckt. Die Achse kann die Achse sein, um welche sich die Rolle drehen kann. Eine Vertiefung wirkt als thermisch isolierend, da ihr Volumen das umgebende Gas, in der Regel Luft, aufweist, welches typischerweise thermisch schlechter leitend ist, als das Material, aus dem die Führungsrolle aufgebaut ist, z.B. ein Metall. Damit wird vorteilhaft erreicht, dass eine Elektrode, welcher thermische Energie zugeführt wurde, diese thermische Energie, nur zu einem geringen Teil an die Führungsrolle abführt, wenn die Elektrode mit der Führungsrolle in mechanischen Kontakt kommt.

Gemäß einiger Ausführungsformen weist die wenigstens eine Vertiefung eine Nutform, eine Kegelform, eine Halbkugel oder eine Pyramidenform auf. Diese Formen der Vertiefungen führen zusätzlich zur thermisch isolierenden Wirkung, dazu, dass Kontaminationsteilchen, welche sich auf der Oberfläche der Elektrode angesammelt haben könnten und sich während der Beförderung der Elektrode durch die Führungsrolle lösen und in die Vertiefung fallen könnten, eine geringe Wahrscheinlichkeit haben, sich aus der Vertiefung zu lösen und wieder als Störstelle an einer Elektrode anzuhaften.

Gemäß einiger Ausführungsformen weist die Führungsrolle mehrere Vertiefungen auf, wobei wenigstens zwei der Vertiefungen untereinander unterschiedliche Formen aufweisen. Dadurch kann ein unterschiedlicher thermischer Isolationsgrad in unterschiedlichen Bereichen der Abrollfäche der Führungsrolle erreicht werden, was insbesondere bei inhomogenen Elektrodenbeschichtungen mit Aktivmaterial vorteilhaft sein kann, um eine optimale Anpassung an die jeweiligen Eigenschaften des Aktivmaterials zu erreichen.

Gemäß einiger Ausführungsformen weist die Führungsrolle an ihrer Abrollfäche ein elektrisch nicht-leitendes Material auf. Dies ist vorteilhaft, wenn der Führungsrolle thermische Energie mittels Induktion zugeführt werden soll. Eine elektromagnetische Kraftwirkung zwischen der Elektrode und der Führungsrolle, welche die Elektrode zur Führungsrolle hin oder weg bewegt, kann vermieden werden, wenn die Führungsrolle ein elektrisch nicht-leitendes Material aufweist.

Gemäß einiger Ausführungsformen weist das elektrisch nicht-leidende Material Keramik und/oder Kunststoff auf. Keramik hat den Vorteil, dass es aufgrund seiner Kristallstruktur eine mechanische Steifigkeit aufweist, und daher eine exakte Führung der Elektrode ermöglicht. Ein Kunststoff kann steif oder flexibel ausgeführt sein, und ist einfach und kostengünstig herzustellen. Es ist auch denkbar, dass die Führungsrolle aus einem von Keramik und Kunststoff hergestellt ist, und die Vertiefungen mit dem jeweils anderen Material verstärkt werden.

Gemäß einiger Ausführungsformen weist die Führungsrolle wenigstens ein Isolationselement auf, welches in der wenigstens einen Vertiefung angeordnet ist. Dadurch wird eine zusätzliche thermisch isolierende Wirkung der Führungsrolle gegenüber der Elektrode erreicht, wenn diese mit der Führungsrolle in mechanischen Kontakt kommt.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:
**Fig. 1a und 1b** schematisch eine Anordnung mit einer zusätzlichen Entspannungs-Baugruppe zur Bearbeitung einer Elektrode.
**Fig. 2** zeigt schematisch Ausgestaltungen des Entspannungsmoduls.
**Fig. 3** zeigt schematisch eine Elektrode mit Bereichen unterschiedlicher beschichteter Dicke.
**Fig. 4** schematisch eine Anordnung mit einer zweiten Verdichtungseinheit.
**Fig. 5** schematisch eine Elektroden-Dickenänderung basierend auf einer Bearbeitung durch die Anordnung.
**Fig. 6a****-d** zeigen schematisch Verfahrensschritte zur Wärmebehandlung mittels einer Führungsrolle, wenn eine ungleichmäßige Beschichtung vorliegt.
**Fig. 7** schematisch eine Führungsrolle mit Vertiefungen und eine Elektrode.
**Fig. 8** schematisch verschiedene Geometrien von Vertiefungen in der Führungsrolle.

In den Figuren werden durchgängig dieselben Bezugszeichen für dieselben oder einander entsprechenden Elemente der Erfindung verwendet.

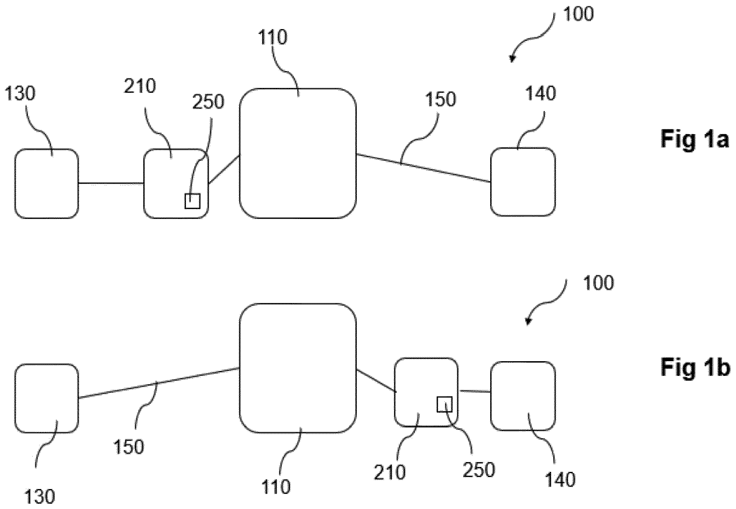

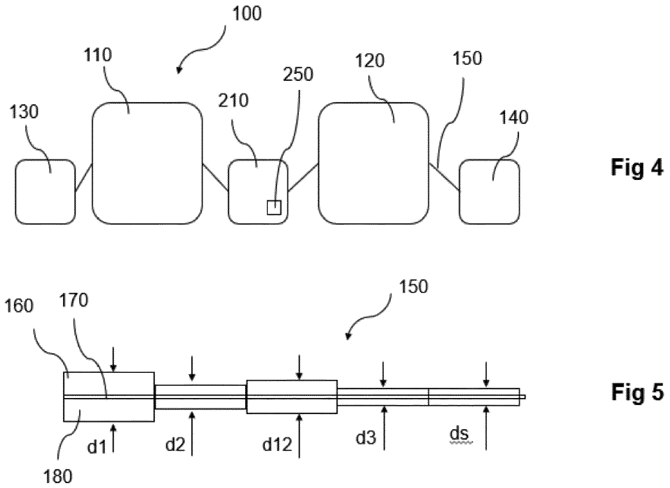

**Fig. 1a und 1b** zeigen schematisch eine Verdichtungsvorrichtung 100 zur Bearbeitung einer Elektrode 150. Die Verdichtungsvorrichtung 100 weist eine Abwicklungsrolle 130, ein Entspannungsmodul 210, eine erste Verdichtungseinheit 110 und eine Aufwicklungsrolle 140 auf. Die erste Verdichtungseinheit 110 und auch die zweite Verdichtungseinheit 120 (siehe Fig. 4) weisen jeweils ein Walzenpaar (hier nicht gezeigt) auf, wobei die Hauptachsen der Walzen, welche eine zylindrische Form aufweisen, im Wesentlichen parallel zueinander verlaufen. Die Walzenpaare sind jeweils in einem Abstand zueinander angeordnet, welcher geringer ist als die Dicke der zugeführten Elektrode, und der Dicke entsprechen, welche die Elektrode durch die Verdichtung durch das jeweilige Walzenpaar erhalten soll.

Die Elektrode 150 ist auf einer Abwicklungsrolle 130 angeordnet, von der die Elektrode 150 entsprechend abgewickelt und dem Entspannungsmodul 210 zugeführt wird. Im Entspannungsmodul 210 wird der Elektrode thermische Energie durch eine dort angeordnete thermische Energiequelle 250 zugeführt. Durch diese thermische Energie soll vermieden werden, dass sich durch die Verdichtung in der Verdichtungseinheit 110 mechanische Spannungen aufbauen. Daran anschließend wird die Elektrode 150 der ersten Verdichtungseinheit 110 zugeführt, in welcher sie komprimiert wird. Im Anschluss an die erste Verdichtungseinheit 110 wird die Elektrode 150 auf einer Aufwicklungsrolle 140 aufgerollt.

Gemäß Fig. 1b ist die Entspannungsmodul 210 im Gegensatz zu Fig. 1a nicht vor der ersten Verdichtungseinheit 110, sondern nach der Verdichtungseinheit und vor der Aufwicklungsrolle 140 angeordnet. Dadurch wird erreicht, dass sich Verdichtungen, die sich in der Elektrode 150 durch die Verdichtung in der Verdichtungseinheit 110 aufgebaut haben, wieder abgebaut werden. Die weiteren Komponenten sind identisch angeordnet wie in Fig. 1a dargestellt.

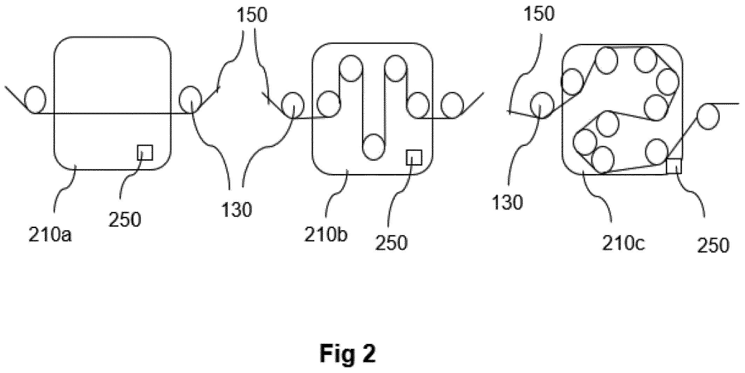

**Fig. 2** zeigt schematisch drei mögliche Ausgestaltungen des Entspannungsmoduls 210, welche als Entspannungsmodul-eins 210a, Entspannungsmodul-zwei 210b und Entspannungsmodul-drei 210c benannt sind, gezeigt. Die beschriebenen Entspannungsmodule 210a, 210b, 210c weisen jeweils zwei oder mehr Führungsrollen 130 auf, durch welche die Elektrode 150 befördert wird. Dabei können die Führungsrollen 130 auch als Umlenkrollen ausgestaltet sein, so dass die Elektrode 150 während ihrer Beförderung unter einem bestimmten Winkel von ihrer ursprünglichen Bewegungsrichtung abgelenkt wird. Durch die Beförderung der Elektrode 150 über die zusätzliche Wegstrecke verlängert sich der Zeitraum, welchen die Elektrode 150 für die Wegstrecke innerhalb des Entspannungsmoduls benötigen. In diesem Zeitraum wird der Elektrode 150 thermische Energie durch die thermische Energiequelle 250 zugeführt. Insofern wird durch die Verlängerung der Wegstrecke der Zeitraum verlängert, in welchem der Elektrode 150 thermische Energie zugeführt wird. Wie oben beschrieben wird dadurch, in Abhängigkeit von der örtlichen Anordnung einem Spannungsaufbau innerhalb der Elektrode 150 vorgebeugt, oder eine schon vorhandene Spannung wieder abgebaut. Die thermische Energiequelle 250 ist beispielsweise eine Infrarot-Lampenheizung oder ein Induktionsgerät. Die thermische Energie weist eine Temperatur zwischen 100°C und 160°C auf. Als vorteilhaft hat sich eine Temperatur zwischen 120°C und 150°C, insbesondere 150°C, erwiesen. Die Temperatur kann entsprechend der Materialzusammensetzung der Elektrode 150 und der verwendeten thermischen Energiequelle optimiert werden.

Gemäß Entspannungsmodul-eins 210a wird die Elektrode 150 mittels zweier Führungsrollen 130, die beabstandet angeordnet sind, befördert. Die Führungsrollen 130 sind jeweils von der Bewegungsrichtung versetzt angeordnet, so dass die Elektrode 150 eine Ablenkung von ihrer ursprünglichen Richtung erfährt. Dadurch wird zum einen die Wegstrecke der Elektrode 150 verlängert. Zum anderen kann über den Ablenkungswinkel der beiden Führungsrollen 130 die Winkel gesteuert werden, in welchen die Elektrode 150 dem Entspannungsmodul-eins 210a zugeführt, und in welchem Winkel die Elektrode 150 aus dem Entspannungsmodul-eins 210a herausgeführt und beispielsweise einer Verdichtungseinheit 110, 120 zugeführt wird.

Gemäß Entspannungsmodul-zwei 210b wird die Elektrode 150 über sieben jeweils beabstandet angeordnete Führungsrollen 130 befördert. Dabei wird die Elektrode 150 im Entspannungsmodul-zwei 210b eingangsseitig von einer Führungsrolle 130 mit einem Winkel, der im Wesentlichen 90-Grad aufweist, abgelenkt. Im Anschluss wird die Elektrode 150 von drei nacheinander folgenden Führungsrollen jeweils um 180 Grad abgelenkt. Dies ist gefolgt von einer weiteren Führungsrolle 130, welche die Elektrode 150 wieder um 90 Grad ablenkt, so dass die Elektrode 150 wieder ihre ursprüngliche Richtung erreicht. Es ist auch denkbar, dass die Wegstrecke durch weitere 180-Grad-Ablenkungen zusätzlich verlängert wird. Abhängig davon, ob die Elektrode 150 in ihrer wieder erreichten ursprünglichen Richtung oberhalb oder unterhalb der anschließenden Führungsrollen 130 befördert werden sollen, kann wird die Anzahl der 180-Grad Ablenkungen angepasst.

Gemäß Entspannungsmodul-drei 210a wird die Elektrode 150 mittels von 11 jeweils beabstandet angeordnete Führungsrollen 130 befördert. Die Führungsrollen 130 sind auf einer gekrümmten Bahn angeordnet, welche mehrmals ihre Richtung ändert.

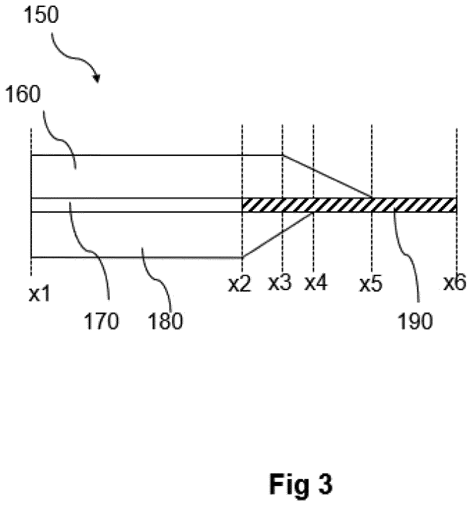

**Fig. 3** zeigt schematisch eine Elektrode mit Bereichen unterschiedlicher beschichteter Dicke. Die Elektrode 150 weist eine Elektroden-Folie 170 auf, welche zwischen einer ersten Elektrodenbeschichtung 160 und einer zweiten Elektrodenbeschichtung 180 angeordnet ist. Die Elektrodenbeschichtungen 160, 180 sind elektrisch leitend.

Weiterhin ist die Elektrode in fünf Bereiche eingeteilt, welche jeweils zwischen den gezeigten Bereichsbegrenzungen x1-x6 angeordnet sind. Danach ist Bereich 1 zwischen den Bereichsbegrenzungen x1 und x2, Bereich 2 zwischen den Bereichsbegrenzungen x2 und x3, Bereich 3 zwischen den Bereichsbegrenzungen x3 und x4, Bereich 4 zwischen den Bereichsbegrenzungen x4 und x5 und Bereich 5 zwischen den Bereichsbegrenzungen x5 und x6 angeordnet.

Im Bereich 1 weist die erste Elektrodenbeschichtung 160 und die zweite Elektrodenbeschichtung 180 über den gesamten Bereich dieselbe konstante Dicke auf.

Im Bereich 2 weist die erste Elektrodenbeschichtung 160 eine konstante Dicke über den gesamten Bereich auf, welche identisch ist mit der Dicke der Beschichtung von Bereich 1. Die zweite Elektrodenbeschichtung 180 weist eine sich verringernde Dicke in Richtung weg von Bereich 1 auf.

Im Bereich 3 weist die erste Elektrodenbeschichtung 160 eine sich verringernde Dicke in Richtungen weg von Bereich 2 auf, und ebenso die zweite Elektrodenbeschichtung 180. Die Dicken und auch die Abnahme der Dicken der ersten Elektrodenbeschichtung 160 und der zweiten Elektrodenbeschichtung 180 sind unterschiedlich. Die Dicke der zweiten Elektrodenbeschichtung 180 nimmt bis auf null ab, sodass an der Grenze zum Bereich 4 die Folie auf einer Seite unbeschichtet ist.

Im Bereich 4 ist eine Seite der Folie unbeschichtet, während auf der anderen Seite die zweite Elektrodenbeschichtung 180 über den Bereich hinweg abnimmt bis zu einem Wert, der wenigstens nahe bei null liegt und der an der Grenze zum Bereich 5 liegt.

Im Bereich 5 ist die Folie 170 der Elektrode 150 vollständig unbeschichtet.

In den Bereichen 2 bis 5 der Elektrode 150, in welchen die Folie wenigstens auf einer Seite mit geringerer Dicke beschichtet ist oder unbeschichtet ist, können bei einer Komprimierung Unebenheiten entstehen. Diese können eine reibungslose Beförderung der Elektrode 150 behindern. Daher ist es von Vorteil insbesondere den genannten Bereichen thermische Energie zuzuführen, um Unebenheiten zu vermeiden. Der Folie 170 wird entsprechend in einem Folienteilbereich 190, welcher wenigstens auf einer Seite mit geringerer Dicke beschichtet ist, thermische Energie mit der thermischen Energiequelle zugeführt.

**Fig. 4** zeigt schematisch eine Verdichtungsvorrichtung 100 mit einer ersten Verdichtungseinheit 110, einer zweiten Verdichtungseinheit 120, sowie einem Entspannungsmodul 210, welches in Bezug auf die Beförderung der Elektrode 150 zwischen der ersten Verdichtungseinheit 110 und der zweiten Verdichtungseinheit 120 angeordnet ist, so dass die Elektrode 150 nach der ersten Verdichtungseinheit 110 und vor der zweiten Verdichtungseinheit 120 das Entspannungsmodul 210 passiert. Das Entspannungsmodul 210 weist eine thermische Energiequelle 250 auf. Weiterhin weist die Verdichtungsvorrichtung 100 eine Führungsrolle 130 auf, welche die Elektrode 150 der ersten Verdichtungseinheit 110 zuführt. In der ersten Verdichtungseinheit 110 wird die Elektrode auf eine erste Dicke komprimiert. Dadurch entstehen in der Elektrode 150 mechanische Spannungen. Diese Spannungen werden in dem Entspannungsmodul 250 durch die Zufuhr von thermischer Energie durch die thermische Energiequelle 250 abgebaut. Im Anschluss wird die Elektrode 150 der zweiten Verdichtungseinheit 120 zugeführt, in welcher die Elektrode 150 zu einer zweiten Dicke komprimiert wird, welche kleiner als die erste Dicke ist. Durch die vorherige Zufuhr von thermischer Energie wird vermieden, dass es nach der ersten Komprimierung und auch nach der zweiten Komprimierung zu einem unkontrollierten Abbau der mechanischen Spannungen kommt, und die Elektrode 150 sich wieder ausdehnt.

**Fig. 5** zeigt schematisch eine Dickenänderung einer Elektrode 150 basierend auf der Bearbeitung durch die Verdichtungsvorrichtung 100 gemäß Fig. 4. Die Elektrode 150 weist eine Elektroden-Folie 170 auf, welche zwischen einer ersten Elektrodenbeschichtung 160 und einer zweiten Elektrodenbeschichtung 180 angeordnet ist. Durch die erste Verdichtungseinheit 110 wird die Elektrode 150 von der ursprünglichen Dicke d1, mit welcher die Elektrode 150 der ersten Verdichtungseinheit 110 zugeführt wird, auf eine erste Dicke d2 komprimiert. Im Anschluss daran passiert die Elektrode 150 das Entspannungsmodul 210, in welchem der Elektrode 150 thermische Energie durch die thermische Energiequelle 250 zugeführt wird. Dadurch werden Spannungen innerhalb der Elektrode 150 abgebaut. Allerdings werden möglicherweise die Spannungen nicht vollständig abgebaut und durch den beschriebenen Rückfederungseffekt nimmt die Dicke der Elektrode von der ersten Dicke d2 zu einer Zwischendicke d12 zu, welche jedoch geringer als die ursprüngliche Dicke d1 der Elektrode ist. Die Elektrode 150 wird mit der Zwischendicke d12 der zweiten Verdichtungseinheit 120 zugeführt, und auf die zweite Dicke d3 komprimiert. Die Dicke der Elektrode 150 bleibt nun konstant bei der zweiten Dicke d3, welche der Solldicke ds entspricht, aufgrund der abgebauten Spannungen im Entspannungsmodul 210.

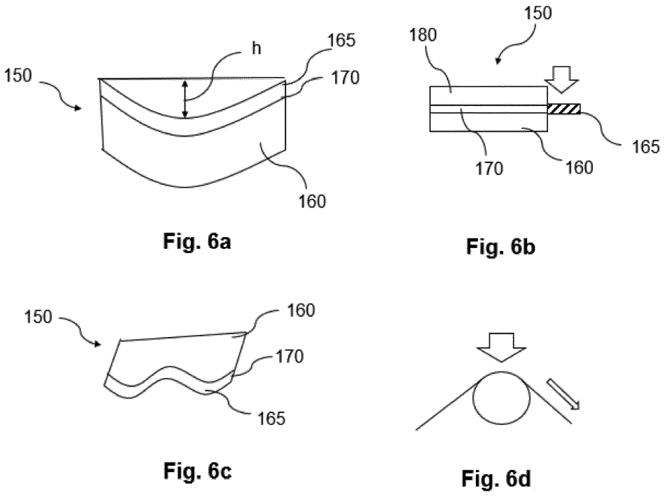

**Fig. 6a****-d** zeigen schematisch die Verfahrensschritte zur Wärmebehandlung mittels einer Führungsrolle, wenn eine ungleichmäßige Beschichtung vorliegt.

In **Fig. 6a** ist eine Elektrode 150 dargestellt, aufweisend eine Elektroden-Folie, welche nur einseitig mit einer ersten Elektrodenbeschichtung 160 beschichtet ist, und einen unbeschichteten Bereich 165. Während einer Verdichtung, beispielsweise in der ersten Verdichtungseinheit 110, wird nur der beschichtete Bereich der Elektrode 150 komprimiert und entsprechend entlang der Längsachse der Elektrode 150 gestreckt. Aufgrund einer einseitigen mechanischen Belastung der Elektrode 150 kann eine Deformation der Elektrode 150 resultieren. Dies kann zu einer Biegung der Elektrode 150 hin zur unbeschichteten Seite der Elektrode 150 führen, welche zu einer Höhendifferenz h im gebogenen Bereich führen kann.

In **Fig. 6b** ist schematisch eine Elektrode 150 dargestellt, bei welcher ein unbeschichteter Bereich 165 dargestellt ist. Dem unbeschichteten Bereich 165 wird thermische Energie zugeführt, um die Biegung abzuschwächen. Die thermische Energie kann beispielsweise durch Induktion dem unbeschichteten Bereich 165 zugeführt werden.

In **Fig. 6c** ist eine Elektrode 150 dargestellt, welcher zusätzliche thermische Energie mittels Induktion zugeführt wurde. Der Bereich, welchem die thermische Energie zugeführt wurde, hat sich verformt. Diese Verformung resultiert aus der Ausdehnung des erwärmten Bereichs 165 einerseits, und der Einwirkung einer elektromagnetischen Kraft durch die Induktion andererseits.

In **Fig. 6d** ist eine Führungsrolle 130 dargestellt, über welche die Elektrode 150 geführt wird, und währenddessen der Elektrode 150 thermische Energie zugeführt wird. Damit der unbeschichtete Bereich 165 sich aufgrund von Wärmeunterschieden nicht verformt ist es erforderlich, dass dem unbeschichteten Bereich 165 gleichmäßig thermische Energie zugeführt wird, so dass der unbeschichtete Bereich 165 über seine gesamte Fläche eine konstante Temperatur aufweist. Hierfür ist es erforderlich, dass der Abstand zwischen der thermischen Energiequelle und dem unbeschichteten Bereich 165 während der Zufuhr der thermischen Energie konstant bleibt. Dies erfordert, dass die Führungsrolle 130 einen konstanten Abstand zur Elektrode 150 aufweist, während die thermische Energie zugeführt wird. Dies kann beispielsweise dadurch erreicht werden, dass zwischen der Elektrode 150 und der Führungsrolle 130 keine elektromagnetische Kraftwechselwirkung besteht, welche insbesondere entstehen kann, wenn die thermische Energie der Elektrode mittels Induktion zugeführt wird und die Führungsrolle ein ferromagnetisches Material aufweist. Wenn die Führungsrolle ein elektrisch-nichtleitendes Material, beispielsweise einem Kunststoff, aufweist kann diese elektromagnetische-Kraftwechselwirkung vermieden werden, und der Abstand zwischen der Führungsrolle 130 und der Elektrode 150 kann konstant gehalten werden.

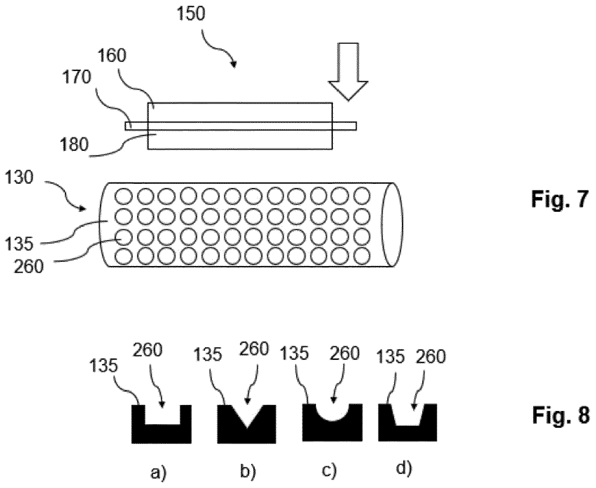

**Fig. 7** zeigt schematisch eine Führungsrolle 130 und eine Elektrode 150. Die Führungsrolle weist ferner eine Abrollfläche mit einer Kontaktfläche 135 und Vertiefungen 260 auf. Die Vertiefungen 260 erstrecken sich von der Abrollfläche bezüglich der Achse der Führungsrolle radial nach innen. Die Elektrode 150 weist eine Elektroden-Folie 170 auf, welche zwischen einer ersten Elektrodenbeschichtung 160 und einer zweiten Elektrodenbeschichtung 180 angeordnet ist. Die Elektrodenbeschichtungen 160, 180 sind elektrisch leitend. Es ist vorteilhaft, wenn der Elektrode 150 vor der Komprimierung thermische Energie zugeführt wurde, und die Elektrode 150 bei der Komprimierung eine vorbestimmte Temperatur aufweist. Dadurch bauen sich während der Komprimierung weniger mechanische Spannungen innerhalb der Elektrode 150 auf. Bei der Beförderung der Elektrode 150 durch die Führungsrolle 130 kann durch den mechanischen Kontakt zwischen der Elektrode 150 und der Führungsrolle 130 thermische Energie von der Elektrode 150 auf die Führungsrolle 130 übertragen werden. Die Vertiefungen 260 wirken hierbei thermisch isolierend, so dass die Übertragung von Wärme an die Führungsrolle 130 zumindest verringert wird. Die Zuführung der thermischen Energie an die Elektrode 150 kann durch elektrische Induktion erfolgen (hier nicht gezeigt). Wenn der Elektrode 150 während des Abrollens auf der Rolle thermische Energie mittels elektrischer Induktion zugeführt und die Führungsrolle 130 bzw. ihre Oberfläche elektrisch-leitend ist, wirkt eine Kraft von der Elektrode 150 auf die Rolle. Um dies zu verhindern ist es vorteilhaft, wenn die Führungsrolle aus einem elektrisch nicht-leitenden Material ausgeführt ist. Das elektrisch nicht-leitende bzw. isolierende Material kann beispielsweise einen Kunststoff oder Keramik aufweisen.

**Fig. 8** zeigt schematisch verschiedene Geometrien von Vertiefungen 260 in der Führungsrolle 130, welche sich von der Abrollfläche nach innen erstrecken.

In a) ist eine Vertiefung 260 mit einem rechtwinkligen Querschnitt gezeigt. Die Vertiefung 260 kann die Form einer Nut, eines Zylinders oder auch eines Quaders aufweisen.

In b) ist eine Vertiefung 260 mit einem dreieckigen Querschnitt gezeigt. Die Vertiefung 260 kann die Form einer Nut oder eines Kegels aufweisen.

In c) ist eine Vertiefung 260 mit einem halbkreisförmigen Querschnitt gezeigt. Die Vertiefung 260 kann die Form einer Nut oder einer Halbkugel aufweisen.

In d) ist eine Vertiefung mit einem trapezförmigen Querschnitt gezeigt. Die Vertiefung kann die Form einer Nut oder einer Pyramide, insbesondere einer stumpfen Pyramide aufweisen.

Die Erfindung eignet sich für die Herstellung von Elektroden für Batteriezellen, insbesondere für Batteriezellen für Kraftfahrzeugbatterien.

### BEZUGSZEICHENLISTE

- 100: Verdichtungsvorrichtung
- 110: Erste Verdichtungseinheit
- 120: Zweite Verdichtungseinheit
- 130: Führungsrolle
- 135: Kontaktfläche
- 140: Aufwicklungsrolle
- 150: Elektrode
- 160: Erste Elektrodenbeschichtung
- 165: unbeschichteter Bereich
- 170: Elektroden-Folie
- 180: Zweite Elektrodenbeschichtung
- 190: Folienteilbereich
- d1, d2, d12, d3, ds: Dicken der Elektrode
- x1, x2, x3, x4, x5, x6: Bereichsgrenzen

- 210: Entspannungsmodul
- 210a: Entspannungsmodul-eins
- 210b: Entspannungsmodul-zwei
- 210c: Entspannungsmodul-drei

- 250: Thermische Energiequelle
- 260: Vertiefungen

## Patentansprüche

1. Kalandriervorrichtung (100) zur mechanischen Verdichtung einer, insbesondere flächigen, Elektrode (150), wobei die Vorrichtung aufweist,
- eine Verdichtungseinrichtung (110, 120),
- eine Führungsrolle (130), wobei die Führungsrolle (130) konfiguriert ist, beim Betrieb der Kalandriervorrichtung die Elektrode (150) der Verdichtungsreinrichtung (110, 120) zuzuführen,
- **dadurch gekennzeichnet, dass** die Führungsrolle (130) an ihrer Abrollfläche abschnittsweise erste Bereiche (260) und zweite Bereiche (135) aufweist, wobei die ersten und die zweiten Bereiche (135, 260) unterschiedliche Wärmeleitfähigkeiten aufweisen.

2. Kalandriervorrichtung (100) gemäß Anspruch 1, wobei die Führungsrolle (130) am ersten Bereich wenigstens eine thermisch isolierende Vertiefung (260) aufweist, welche sich in Bezug auf eine Achse der Führungsrolle (130) von der Abrollfäche radial nach innen erstreckt.

3. Kalandriervorrichtung (100) gemäß einem der vorherigen Ansprüche, wobei die wenigstens eine Vertiefung (260) eine Nutform, eine Kegelform, eine Halbkugelform oder eine Pyramidenform aufweist.

4. Kalandriervorrichtung (100) gemäß Anspruch 2 oder 3, wobei die Führungsrolle (130) mehrere Vertiefungen (260) aufweist, wobei wenigstens zwei der Vertiefungen (260) untereinander unterschiedliche Formen aufweisen.

5. Kalandriervorrichtung (100) gemäß einem der vorherigen Ansprüche, wobei die Führungsrolle (130) an ihrer Abrollfäche ein elektrisch nicht-leitendes Material aufweist.

6. Kalandriervorrichtung (100) gemäß Anspruch 5, wobei das elektrisch nicht-leitende Material Keramik und/oder Kunststoff aufweist.

7. Kalandriervorrichtung (100) gemäß einem der vorherigen Ansprüche, wobei die Führungsrolle (130) wenigstens ein Isolationselement aufweist, welches in der wenigstens einen Vertiefung (260) angeordnet ist.

## Claims

1. Calendering apparatus (100) for mechanical compaction of an electrode (150), especially a twodimensional electrode (150), wherein the apparatus comprises
- a compacting device (110, 120),
- a guide roll (130), wherein the guide roll (130) is configured to feed the electrode (150) to the compacting device (110, 120) in operation of the calendering apparatus,
- **characterized in that**
the guide roll (130) has first regions (260) and second regions (135) in sections on its rolling surface, wherein the first and the second regions (135, 260) have different thermal conductivities.

2. Calendering apparatus (100) according to Claim 1, wherein the guide roll (130) has at least one thermally insulating depression (260) in the first region, and this extends radially inward from the rolling surface in relation to an axis of the guide roll (130).

3. Calendering apparatus (100) according to either of the preceding claims, wherein the at least one depression (260) is in groove form, spherical form, hemispherical form or pyramidal form.

4. Calendering apparatus (100) according to Claim 2 or 3, wherein the guide roll (130) has multiple depressions (260), where at least two of the depressions (260) have different forms from one another.

5. Calendering apparatus (100) according to any of the preceding claims, wherein the guide roll (130) has an electrically nonconductive material on its rolling surface.

6. Calendering apparatus (100) according to Claim 5, wherein the electrically nonconductive material includes ceramic and/or plastic.

7. Calendering apparatus (100) according to any of the preceding claims, wherein the guide roll (130) includes at least one insulation element disposed in the at least one depression (260).

## Revendications

1. Dispositif de calandrage (100) pour le compactage mécanique d'une électrode (150), en particulier d'une électrode plane, le dispositif comprenant
- un dispositif de compactage (110, 120),
- un galet de guidage (130), le galet de guidage (130) étant conçu pour amener l'électrode (150) au dispositif de compactage (110, 120) pendant le fonctionnement du dispositif de calandrage,
**caractérisé en ce que**
le galet de guidage (130) comporte des premières régions (260) et des deuxièmes régions (135) sur sa surface de roulement, les premières et les deuxièmes régions (135, 260) ayant des conductivités thermiques différentes.

2. Dispositif de calandrage (100) selon la revendication 1, dans lequel le galet de guidage (130) présente, dans la première région, au moins un évidement thermiquement isolant (260) qui s'étend radialement vers l'intérieur par rapport à un axe du galet de guidage (130) depuis la surface de roulement.

3. Dispositif de calandrage (100) selon l'une quelconque des revendications précédentes, dans lequel ledit au moins un évidement (260) présente une forme de rainure, une forme conique, une forme hémisphérique ou une forme pyramidale.

4. Dispositif de calandrage (100) selon la revendication 2 ou 3, dans lequel le galet de guidage (130) présente plusieurs évidements (260), au moins deux des évidements (260) ayant des formes différentes les unes des autres.

5. Dispositif de calandrage (100) selon l'une quelconque des revendications précédentes, dans lequel le galet de guidage (130) présente sur sa surface de roulement un matériau non électriquement conducteur.

6. Dispositif de calandrage (100) selon la revendication 5, dans lequel le matériau non électriquement conducteur est en céramique et/ou en matière plastique.

7. Dispositif de calandrage (100) selon l'une quelconque des revendications précédentes, dans lequel le galet de guidage (130) comporte au moins un élément isolant qui est disposé dans au moins un évidement (260).
